(19)

Europäisches
Patentamt
European
Patent Office
Office européen
des brevets

(11) **EP 2 199 821 A2**

(12) **EUROPEAN PATENT APPLICATION**

(43) Date of publication:
**23.06.2010 Bulletin 2010/25**

(51) Int Cl.:
***G01S 7/40*** (2006.01)          ***G09B 9/54*** (2006.01)

(21) Application number: **09275103.1**

(22) Date of filing: **29.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.10.2008 GB 0819891**
**30.10.2008 US 109526 P**

(71) Applicant: **AGD Systems Limited**
**Staverton**
**Cheltenham Gloucestershire**
**GL51 0TF (GB)**

(72) Inventor: **Williams, Peter Robert**
**Malvern, Worcestershire WR14 2QF (GB)**

(74) Representative: **Jones, Ithel Rhys et al**
**Wynne-Jones, Lainé & James LLP**
**Essex Place**
**22 Rodney Road**
**Cheltenham**
**Gloucestershire GL50 1JJ (GB)**

(54) **Simulating a radar signal reflected from a moving target**

(57)    A device (100) adapted to simulate a radar signal reflected from a moving target including a receiver (120) for receiving a radar signal and a device (108, 114A, 114B, 116A, 116B, 118) for modulating the radar signal with a Doppler frequency to produce a modulated signal simulating the radar signal reflected from a moving target. The device further includes a transmitter (124) for transmitting the modulated signal. The device for modulating the radar signal is arranged to simulate the radar signal reflected from a simulated moving target having a length selected by a user.

*Fig. 1*

## Description

The present invention relates to simulating a radar signal reflected from a moving target.

The use of radar devices for detecting the speed of moving targets, e.g. on-road vehicles, is well-known. Testing such devices involves presenting the device with a signal that is intended to simulate the radar signal transmitted by the device being reflected from a moving target of a known speed and checking the speed reading taken by the device. A tuning fork can be used to produce this type of simulated signal, but the signal produced by a fork is a double sideband signal. Many radar devices reject double sideband signals to improve immunity to spurious signals. Electronic devices that generate simulated reflected signals are also known. However, such simulation devices tend to be bulky and have limited functionality.

Embodiments of the present invention are intended to address at least some of the abovementioned problems.

According to a general aspect of the present invention there is provided a device adapted to simulate a radar signal reflected from a moving target, the device including:

a receiver for receiving a radar signal;
a device for modulating the radar signal with a Doppler frequency to produce a modulated signal simulating the radar signal reflected from a moving target;
a transmitter for transmitting the modulated signal.

The device may include a housing including a handle portion. The housing may include an integrated interface for receiving user input and a display.

The device for modulating the radar signal may be arranged to simulate the radar signal reflected from a simulated moving target having a length selected by a user. The simulated moving target length may be selected from a plurality of options, each of the options representing a class or category of vehicle, e.g. a car/automobile, a bus/motor-home and a lorry/truck.

The device for modulating the radar signal may be arranged to apply a cosine correction to the modulated signal, the cosine correction being based on an angle selected by a user that corresponds to an angle of transmission of the received radar signal.

The device for modulating the radar signal may use a direct digital synthesiser arrangement. The direct digital synthesiser arrangement may include first and second direct digital synthesisers connected to a quadrature mixer device. The first and second direct digital synthesisers may be connected I and Q inputs of the quadrature mixer device and the first and second digital synthesisers may be clocked from a common clock source to ensure that output frequencies of the first and second direct digital synthesisers are identical and have a required phase difference. The device for modulating the radar signal may be a single sideband modulator. The device may allow a user to select a simulated target moving away from, or approaching, a radar device that produces the radar signal in use.

The device may include a first circuit board including a microprocessor and at least part of the digital synthesiser arrangement and a second circuit board including at least the transmitter and the receiver. The first and second circuit boards may be arranged in parallel within a housing for the device.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:

Figure 1 is a schematic diagram showing components of one example of the signal simulator device;
Figure 2 is a diagram illustrating an "across the road" radar device that can be used with the simulator device;
Figure 3 is an exterior view of the example signal simulator device, and
Figures 4 and 5 are example user interface displays generated by the simulator device.

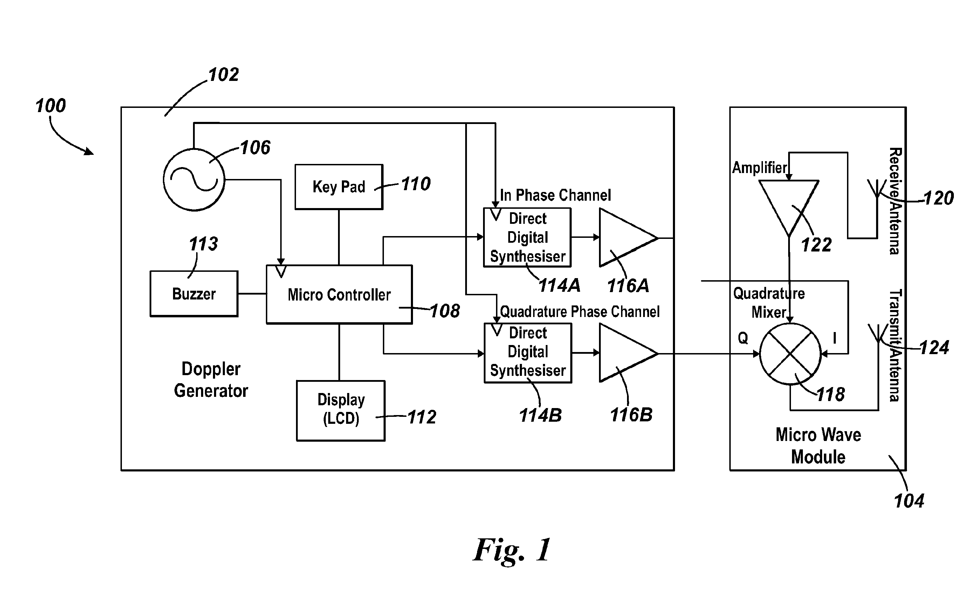

Referring initially to Figure 1 the example device 100 includes components arranged on first 102 and second 104 circuit boards. The first circuit board 102 includes a reference frequency 106 connected to a microcontroller 108. An example of a suitable microcontroller is the dsPIC33FJ128GPX02/X04, which includes various onchip features such as a programmable memory, Timers, Direct Memory Access, Universal Asynchronous Receiver-Transmitter and a 16-bit dual channel Digital to Analogue Converter, but it will be understood that other types of microprocessors can be used. The microcontroller 108 is connected to user interface components including a keypad 110, an LCD display 112 and a buzzer 113. These user interface components are exemplary only and variations could be used, e.g. touch-screens.

The microprocessor 108 is also configured to control a first Direct Digital Synthesiser 114A and a second Direct Digital Synthesiser 114B (both of which also receive a reference frequency from a frequency source 106). The synthesisers may comprise the AD9833 DDS from Analog Devices, Inc of Norwood, MA, USA, for example. The first and second synthesisers output to respective first and second amplifiers 116A, 116B.

The first and second amplifiers 116A, 116B are connected to a quadrature mixer device 118 mounted on the second circuit board 104. The mixer device may comprise the HMC524LC3B from Hittite Microwave Corporation of Chelmsford, MA, USA, for example. The first synthesiser 114A/amplifier 116A provide the in phase channel and are connected to the I input of the mixer device 118. The second synthesiser 114B/amplifier 116B provide the quadrature phase channel and are connected to the Q input of the mixer device 118. The mixer device also receives an input from a microwave receiver antenna 120 (via an amplifier 122). The output of the mixer device is connected to a microwave transmitting antenna 124. The mixer 118, receiver antenna 120, amplifier 122 and transmit antenna 124 are all mounted on the second circuit board 104 in the example device. In one practical embodiment of the device, the second circuit board 104 is fitted on top of the first circuit board 102 within a housing. Having the microwave transmitter and receiver components at least fitted on a separate circuit board to the other components of the device, with one board located on top of the other, results in a relatively compact design. Thus, all the circuitry can fit inside a housing that is lightweight and easy to store/transport, which makes the hand-held device easy and comfortable to use.

In use, the device 100 is activated so that the receive antenna 120 is able to receive a signal from a remote radar device. An example of a suitable radar device is the AGD340 produced by AGD Systems Ltd of Gloucestershire, United Kingdom. The received radar signal is amplified by device 122 and applied to the quadrature mixer 118. The quadrature mixer modulates the signal from the radar with a Doppler frequency that is applied to its I and Q inputs. Having the Doppler signals generated by direct digital synthesis allows accurate frequency and phase control of the I and Q signals that is important for the quadrature mixer to function correctly. Further, the direct digital synthesis devices 114A, 114B are clocked by the same clock source to ensure their output frequencies are identical and have a required/preset phase difference. By using a quadrature mixer 118 a single sideband Doppler target is simulated, allowing a target either moving towards or away from the radar device to be simulated. The output of the mixer 118 is then applied to the transmit antenna 124, which radiates the modulated signal back towards the radar device, thus simulating a moving target.

To correctly simulate a moving target the required Doppler frequency can be determined using the equation below:

$$F_d = -2 \cdot \frac{V_t \cdot F_t}{c}$$

$F_d$ = Doppler Frequency
$F_t$ = Transmitter Frequency
$V_t$ = Velocity of target
$c$ = Speed of light

This equation is effectively implemented by instructions processed by components of the device 100 in order to produce a signal simulating the received radar signal reflecting from a target of a certain speed (the interface described below can allow a user of the device 100 to select the speed).

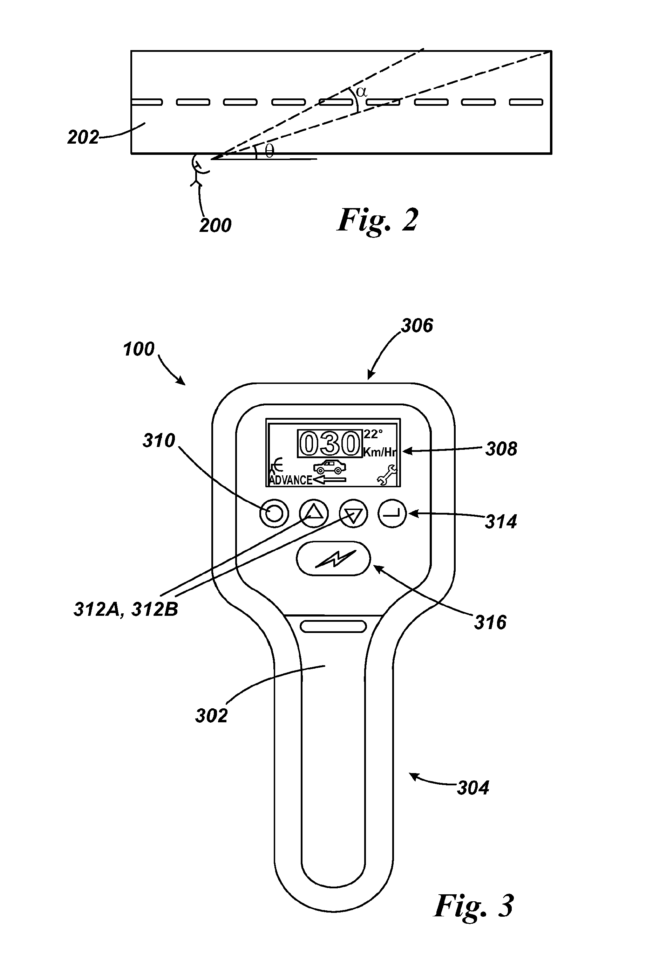

In addition to allowing the speed and direction of the simulated moving target to be chosen, embodiments of the device 100 can also allow for correction to the Doppler frequency generated. In a known type of radar device commonly called an "across the road" radar (e.g. AGD340 produced by AGD Systems Ltd) the signal is transmitted by the radar device 200 across a road 202 at an angle θ, as illustrated schematically in Figure 2. The radar device 200 will make a cosine correction to the Doppler signal it receives back from a moving target so as to record the correct speed of the target on the road 202. In order for the device 100 to work properly with this type of radar device a cosine correction needs to be made to the simulated reflected signal. The device 100 can be configured for use with "across the road radars" by a user, who enters the angle of the signal transmitted by the radar device 200 (information regarding the angle for these types of radar devices is readily available by the manufacturers and will be known to the user). The device 100 can then determine the required Doppler frequency using the equation below and use this to produce the modulated signal:

$$F_d = -2 \cdot \frac{V_t \cdot F_t \cdot \cos(\theta)}{c}$$

Some "across the road" radars determine the type of the vehicle being detected by measuring how long a vehicle stays in the beam transmitted by the radar device. The period of time for which the target/vehicle stays in the radar beam is dependent on the vehicle length. The device 100 can be configured to simulate a number of different vehicle types and allow a user to select one of these. For each vehicle type a different length is used to determine for how long the device 100 simulates a target after being triggered. The duration of the signal transmitted by the device 100 is given by the equation below:

$$T = \frac{L}{V_t}$$

L = Target Simulated Length
$V_t$ = Velocity of target
T = Target Simulation Time

Figure 3 shows an example of the device 100 where the circuitry is contained with a housing 302. The housing includes an elongate handle portion 304 and a user interface portion 306 at one end. The user interface includes an LCD display 308, a power on/off button 310, menu navigation buttons 312A, 312B, menu option select button 314 and an "activate test" button 316. It will be appreciated that the user interface items shown are exemplary only and variations are possible, e.g. numerical keypad, roller-ball, etc. In use, the user holds the back of the device 100 in the general direction of a radar device and presses the "activate test" button 316. The buzzer 113 in the device emits a sound whilst a target is being simulated to allow the user to easily establish when the device is actively simulating i.e the device is transmitting the modulated signal. The device 100 can be powered by a battery (not shown) fitted within the housing 302. The battery can comprise two AA batteries.

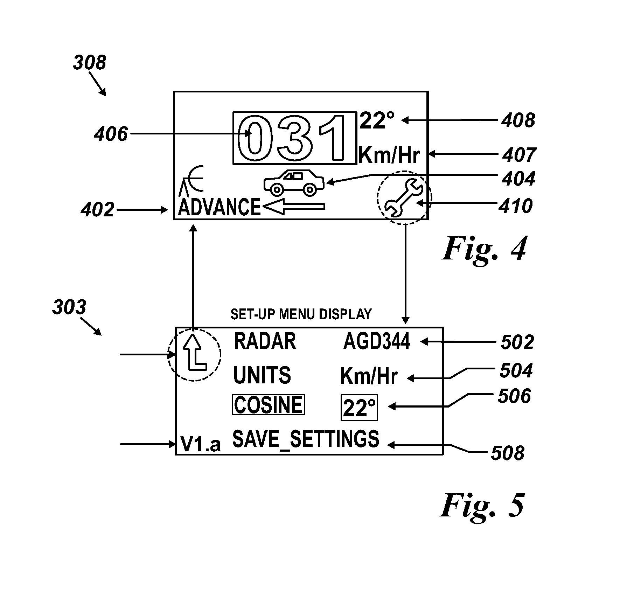

Figures 4 and 5 show examples of displays that the device can generate on the LCD 308. Figure 4 illustrates an example of the display being used to configure/display the type of radar signals to be received and transmitted by the device 100. Display position 402 can either show "Advance" (as in the example) or "Recede", which denotes the notional direction of the simulated moving target with respect to the radar signal source. The directional information can be supplemented by a representation of the radar device and an arrow pointing away/towards from it. Display position 404 can show the type of vehicle being simulated. A car is shown in the example display, but other types of vehicles, e.g. bus, truck, etc, can be selected. Alternatively, a numerical value indicating the length of the simulated vehicle could be entered.

Display position 406 shows the speed of the simulated moving target. In the example the speed is 131 kilometres per hour (speed unit shown at display position 407), but it will be understood that different unit, e.g. miles per hour, could be selected/used. The user can either select a numerical value representing the desired speed, or select a pre-set speed from a set, e.g. 21 km/hr, 38 km/hr, ... , 250 km/hr. Display position 408 gives the cosine (radar mounting angle), shown as 22° in the example. Display position 410 is an icon that can be selected by the user to access a set-up menu.

Figure 5 shows an example of the set-up menu display. The version of the radar device with which the device 100 is to be used can be selected at location 502. Selecting different radar types changes the other options available. For instance, if the device is to be used against a sign driver radar then no cosine correction option will be displayed. The speed display units and cosine angle mentioned above can be selected at locations 504 and 506, respectively. Selecting the "save settings" option 508 allows changes that have been made to the configuration of the device to be stored in the non-volatile memory of the microprocessor.

It will be appreciated that some of the functionalities described above are optional and simplified versions of the device may be provided with only a subset of the functions. The device provides a compact Doppler signal simulator that is flexible and easy to use.

## Claims

1. A device (100) adapted to simulate a radar signal reflected from a moving target, the device including:

   a receiver (120) for receiving a radar signal;
   a device (108, 114A, 114B, 116A, 116B, 118) for modulating the radar signal with a Doppler frequency to produce a modulated signal simulating the radar signal reflected from a moving target;
   a transmitter (124) for transmitting the modulated signal,

   wherein the device for modulating the radar signal is arranged to simulate the radar signal reflected from a simulated moving target having a length selected by a user.

2. A device according to claim 1, wherein the simulated moving target length is selectable from a plurality of options, each of the options representing a class or category of vehicle, e.g. a car/automobile, a bus/motor-home and a lorry/truck.

3. A device according to claim 1 or 2, including a housing (302) having including a handle portion (304).

4. A device according to claim 3, wherein the housing (302) includes an integrated interface (310 - 316) for receiving user input and a display (308).

5. A device according to any one of the preceding claims, wherein the device (108, 114A, 114B, 116A, 116B, 118) for modulating the radar signal is arranged to apply a cosine correction to the modulated signal, the cosine correction being based on an angle selected by a user that corresponds to an angle of transmission of the received radar signal.

6. A device according to claim 3 or 4, wherein the device is powered by a battery fitted within the housing (302).

7. A device according to any one of the preceding claims, wherein the device for modulating the radar signal uses a direct digital synthesiser arrangement (114A, 114B).

8. A device according to claim 7, wherein the direct digital synthesiser arrangement includes first (114A) and second (114B) direct digital synthesisers connected to a quadrature mixer device (118).

9. A device according to claim 8, wherein the first (114A) and second (114B) direct digital synthesisers are clocked from a common clock source so that output frequencies of the first and second direct digital synthesisers are identical and have a required phase difference.

10. A device according to any one of the preceding claims, wherein the device (108, 114A, 114B, 116A, 116B, 118) for modulating the radar signal is a single sideband modulator.

11. A device according to claim 10, wherein the device (100) allows a user to select a simulated target moving away from, or approaching, a radar device (200) that produces the radar signal in use.

12. A device according to any one of claims 7 to 11, including a first circuit board (102) having a microprocessor (108) and at least part of the digital synthesiser arrangement (114A, 114B) and a second circuit board (104) including at least the transmitter (124) and the receiver (120).

13. A device according to claim 12, wherein the first (102) and second (104) circuit boards are arranged in parallel within a housing (302) for the device (100).

EP 2 199 821 A2

*100*

*102*

*106*

Key Pad — *110*

In Phase Channel

Direct Digital Synthesiser

*114A*    *116A*

*113*

Buzzer | Micro Controller — *108*

Quadrature Phase Channel

Direct Digital Synthesiser

*114B*    *116B*

Doppler Generator

Display (LCD) — *112*

Amplifier

Receive/Antenna — *120*

*122*

Quadrature Mixer

Q       I

*118*

Transmit/Antenna — *124*

Micro Wave Module

*104*

*Fig. 1*

*Fig. 2*

*Fig. 3*

308

406    (031) 22° ← 408

Km/Hr ← 407

← 404

402 → ADVANCE ← 410

*Fig. 4*

303

SET-UP MENU DISPLAY

RADAR    AGD344 ← 502

UNITS    Km/Hr ← 504

COSINE    22° ← 506

V1.a    SAVE_SETTINGS ← 508

*Fig. 5*